# EUROPÄISCHE PATENTSCHRIFT

(11) **EP 0 612 138 B1**
(45) Veröffentlichungstag und Bekanntmachung des Hinweises auf die Patenterteilung: **27.12.1996**
(21) Anmeldenummer: 94101754.3
(22) Anmeldetag: 05.02.1994
(51) Int. Cl.: H02K 7/18, H02K 5/00, H02K 5/24, F02B 63/04

(54) **Stromerzeuger für Einsatzzwecke wie Camping, Garten oder Boote**
Electric generator used for camping, garden and boats
Générateur électrique utilisé pour le camping, le jardin et les bateaux

(30) Priorität: 16.02.1993 DE 4304630
(43) Veröffentlichungstag der Anmeldung: 24.08.1994
(73) Patentinhaber: Prettl, Rolf, 72072 Tübingen (DE)
(72) Erfinder: Braun, Hans-Wilhelm, D-72770 Reutlingen (DE)
(74) Vertreter: Weller, Wolfgang, Dr.rer.nat.

(56) Entgegenhaltungen:
- EP-A- 0 453 616
- EP-A- 0 514 317
- WO-A-83/01712
- WO-A-92/02741
- CH-A- 380 813
- US-A- 3 742 264
- US-A- 4 677 940
- US-A- 4 827 147

## Beschreibung

Die Erfindung betrifft einen Stromerzeuger für Einsatzzwecke, wie Camping, Garten oder Boote, mit einem Verbrennungsmotor, dessen Motorwelle in Wirkverbindung mit einem Rotor eines stromerzeugenden Generators steht, sowie mit einem diese Bauteile tragenden Gestell.

Ein solcher Stromerzeuger ist aus der DE-35 01 185 A1 bekannt.

Derartige Stromerzeuger dienen dazu, unabhängig von einem Stromnetz an Ort und Stelle Strom zu erzeugen. Der Verbrennungsmotor dient dabei als Antriebsmotor für den stromerzeugenden Generator. Dazu steht die Motorwelle des Verbrennungsmotors in Wirkverbindung mit einem Rotor des stromerzeugenden Generators, und zwar derart, daß bei laufendem Verbrennungsmotor der Rotor gedreht wird. Der Rotor ist von einem diesen umgebenden Stator umgeben, durch die Relativbewegung zwischen Rotor und Stator wird, wie allgemein bekannt, Strom erzeugt.

Stromerzeuger für die genannten Einsatzzwecke sollen möglichst handlich sein, daher ist üblicherweise ein Gestell vorgesehen, das meist auch noch mit Rädern versehen ist, so daß der Stromerzeuger als kompakte Baueinheit ausgebildet ist, die beispielsweise einfach von Hand ergriffen werden kann und an derjenigen Stelle abgestellt werden kann, an der der Strom benötigt wird.

Ein Problem bei der Herstellung von derartigen Stromerzeugern ist, daß zwischen dem Rotor des Generators und dem Stator üblicherweise ein sehr geringer Luftspalt im Bereich von 0,3 mm oder geringer vorhanden ist, der Rotor somit exakt zentriert im Stator aufgenommen sein muß und im Betrieb so schwingungsarm laufen muß, daß dieser geringe Luftspalt durch Schwankungen zwischen Rotor und Stator nicht überbrückt wird. Dies erfordert nun besondere bauliche Maßnahmen im Bereich der Wirkverbindung zwischen dem Rotor des Generators und der Motorwelle des Verbrennungsmotors. Dazu ist es auf diesem Gebiet allgemein bekannt geworden, die Endbereiche der Motorwellen von Verbrennungsmotoren für diesen speziellen Einsatzbereich konisch verjüngend auszubilden. Dementsprechend ist am äußeren Endbereich des Rotors ein Innenkonus vorzusehen, wobei diese Teile exakt bearbeitet und aufeinander abgestimmt sein müssen, damit bei ineinandergesetztem Innenkonus der Rotorwelle und Außenkonus der Motorwelle eine exakte Zentrierung von Motorwelle und Rotor erfolgt, so daß der Rotor mit der gewünschten Genauigkeit im Stator läuft. Da üblicherweise die Motorwelle von solchen Verbrennungsmotoren zugleich ein Endstück der Kurbelwelle des Motors ist, werden spezielle Verbrennungsmotoren für den Einsatz in Stromerzeugern hergestellt. Dementsprechend sind Generatoren notwendig, die mit exakt gearbeitetem, diesem Außenkonus der Motorwelle angepaßten Innenkonus versehen sind. Da Hersteller von Verbrennungsmotoren meist nicht auch zugleich Hersteller von stromerzeugenden Generatoren sind, müssen die Hersteller von Stromerzeugern, die üblicherweise diese beiden Bauteile zukaufen und montieren, außerdem noch Sorge dafür tragen, daß entsprechende Befestigungsflansche vorgesehen sind, die ein Montieren der beiden Bauteile, nämlich Verbrennungsmotor und Generator, untereinander überhaupt ermöglichen.

Aus der WO 83/017 12 ist ein Stromerzeuger bekannt, bei dem ein Verbrennungsmotor, dessen vorstehender Motorwellenendabschnitt mit mehreren umfänglich verteilten Längsnuten versehen ist, mit einem Generator verbunden wird, von dem ein Endabschnitt des Rotors vorsteht, der ebenfalls umfänglich mit mehreren Längsnuten versehen ist.

Zur drehschlüssigen Verbindung zwischen genutetem Endabschnitt der Motorwelle und genutetem Endabschnitt des Rotors werden diese beiden Enden in gegenüberliegende Enden einer hohlen Hülse eingesteckt, die an ihrer Innenseite entsprechend mit umfänglich verlaufenden Längsnuten versehen ist. Zur Verbindung von Verbrennungsmotorkörper einerseits und Körper des Generators andererseits ist ein Adapter vorgesehen, der einerseits mit einer Stirnseite des Generators fest verbunden werden kann und andererseits mit der gegenüberliegenden, an den Adapter angepaßten Stirnseite des Verbrennungsmotors.

Nachteilig bei einer derartigen Konstruktion ist, falls die Hülse, in die die beiden genuteten Endabschnitte von Verbrennungsmotor und Generator eingeschoben werden sollen, als starres Bauteil ausgebildet ist, daß eine sehr exakte Bearbeitung und Ausrichtung der eingesteckten Abschnitte notwendig ist. Der Rotor eines Generators ist üblicherweise an zwei Stellen, nämlich am vorderen und am hinteren Ende des Generators, gelagert. Gleichermaßen ist dies üblicherweise bei der Motorwelle der Fall. Sollen nun diese über insgesamt vier Lagerpunkte fixierten Wellen über ein starres Teil miteinander verbunden werden, müßte dessen Bearbeitung und Ausrichtung deswegen besonders exakt sein, da durch die eingeschobenen Enden zwei weitere "Lagersitzpunkte" entstehen, so daß dann insgesamt sechs exakt untereinander ausgerichtete Lagerpunkte vorhanden sein müßten, nämlich die vier Lagerpunkte von Rotor und Motorwelle, sowie die beiden endseitigen Sitze in der Hülse, in denen die genuteten Enden von Generator bzw. Verbrennungsmotor eingeschoben sind. Dies ist, wenn überhaupt, nur mit einem erheblichen technischen Aufwand zu erzielen, was zu einem sehr teuren Produkt führen würde, das für die eingangs genannten Verwendungszwecke ohne Marktchance wäre.

Dazu ist beispielsweise aus dem DE-GM 17 16 373 bekannt geworden, die beiden Enden von Generator und Motorwelle über ein gummielastisches Element zu verbinden, in das diese beiden Enden eingeschoben sind. Bei den hohen Drehzahlen von Stromgeneratoren im Bereich von 3.000 upm sind gummielastische Elemente den Belastungen auf Dauer nicht gewachsen, so daß nach und nach Unwuchten entstehen, die anfänglich in einem Vibrieren des Motors ersichtlich sind, und dann alsbald zur Funktionsunfähigkeit des Stromerzeugers führen.

Aufgabe der vorliegenden Erfindung ist, einen Stromerzeuger der eingangs genannten Art derart zu verbessern, daß Bauteile aus Großserienproduktionen anderer Einsatzzwecke zum Einsatz kommen, die nicht speziell auf den Einsatzzweck zur Herstellung von Stromerzeugern baulich angepaßt sind, um zu einer technisch einfacheren und somit auch wirtschaftlicheren Fertigung von betriebssicheren Stromerzeugern zu gelangen.

Erfindungsgemäß wird die Aufgabe dadurch gelöst, daß der Verbrennungsmotor ein serienmäßiger Rasenmähermotor ist, dessen serienmäßiger Motorwellenendabschnitt mit einem diesem Endabschnitt angepaßten Endabschnitt des Rotors unmittelbar verbunden ist, und daß ein Adapter vorgesehen ist, der einerseits an vorhandenen Befestigungsstellen des Rasenmähermotors angebracht ist, und andererseits mit dem Generator verbunden ist.

Rasenmähermotoren sind Großserienprodukte, die weltweit von einigen Großherstellern in sehr hohen Stückzahlen mit den entsprechenden günstigen Verkaufspreisen angeboten werden. Rasenmähermotoren liegen in ihrer Leistung in dem Bereich, in dem auch Verbrennungsmotoren für Stromerzeuger liegen, die für die genannten Einsatzzwecke wie Camping, Garten oder Boote Verwendung finden. Derartige Rasenmähermotoren sind mit einer Motorwelle versehen, deren zylindrischer Endabschnitt vom Motorgehäuse vorsteht. Dieser Endabschnitt dient dazu, um an der Motorwelle das Messer des Rasenmähers zu befestigen. Darüber hinaus sind am Rasenmähermotor bestimmte Befestigungsstellen vorgesehen, über die dieser mit dem Gestell oder dem Schutzgehäuse, das das rotierende Messer des Rasenmähers umgibt, montiert werden kann. Üblicherweise sind dies drei Befestigungsstellen, meist mit einem Innengewinde versehene Sacklochbohrungen, über die der Motor fest sitzend angebracht werden kann. Da bei entsprechend großen Messern bei Unwuchten starke Vibrationen entstehen können, sind die Befestigungsstellen so ausgebildet, daß ein fester Sitz des Rasenmähermotors gewährleistet ist. Die Befestigungsstellen sind außerdem derart, daß eine gute Zentrierung der Motorwelle in dem Gehäuse, das das Rasenmähermesser umgibt, möglich ist, um sicherzustellen, daß durch Vibrationen das Messer nicht gegen dieses Gehäuse schlägt.

Die Erfindung schlägt nunmehr vor, sich diese baulichen Maßnahmen zunutze zu machen und ohne jegliche Veränderung an dem Rasenmähermotor diesen zur Herstellung eines Stromerzeugers heranzuziehen. Somit entfallen speziell für den Anwendungszweck zur Erzeugung eines Stromerzeugers üblicherweise vorgesehene Zentriermaßnahmen durch Ausbildung der Motorwelle als Konus bzw. durch das Vorsehen von bestimmten Befestigungsstellen bzw. speziell vorgefertigten Befestigungsflanschen. In anderen Worten ausgedrückt, ein wesentlicher Aspekt der Erfindung ist, serienmäßige Rasenmähermotoren so einzusetzen, wie sie sind, das heißt den Endbereich der Motorwelle unverändert zu lassen und lediglich den Endabschnitt des Rotors des Generators anzupassen. Darüber hinaus werden die vorhandenen Befestigungsstellen des Rasenmähermotors unverändert herangezogen, um über den Adapter, der diesen Befestigungsstellen angepaßt ist, eine Verbindung mit dem Generator zu ermöglichen. Der Einsatz von serienmäßigen Rasenmähermotoren hat darüber hinaus den erheblichen Vorteil, daß aufgrund der Großserienproduktion derartige Rasenmähermotoren eine ausgereifte Technik aufweisen und außerdem den zwischenzeitlich sehr strengen Umweltvorschriften dahingehend angepaßt sind, daß derartige Rasenmähermotoren leise sind, wenig Treibstoff verbrauchen und ferner umweltverträgliche Abgaswerte aufweisen. Ein weiterer wichtiger Aspekt der Erfindung ist, diese Vorteile bei der Herstellung von Stromerzeugern für die genannten Einsatzzwecke zu übernehmen, da auch diese Einsatzzwecke umweltschonende, das heißt abgasarme und leise Motoren erfordern. Die Fertigung insgesamt wird deswegen vereinfacht und wirtschaftlicher, da ein aus einer Großserie stammendes Bauteil völlig unverändert, so wie es ist, eingesetzt wird und lediglich der Endbereich des Rotors des Generators dem Endabschnitt der Motorwelle des Rasenmähermotors angepaßt wird. In Zusammenhang mit dem Adapter ist es dann möglich, mit diesen konstruktiv einfachen und wirtschaftlichen Maßnahmen die ausreichende Zentrierung und somit Laufruhe des Rotors im Stator mit der gewünschten Betriebssicherheit sicherzustellen.

Somit wird die Aufgabe vollkommen gelöst.

In einer weiteren Ausgestaltung der Erfindung ist der Endabschnitt des Rotors als Hülse ausgebildet, in der der serienmäßige Endabschnitt der Motorwelle aufgenommen ist.

Diese Maßnahme hat zum einen den Vorteil, daß der Endabschnitt formschlüssig von der Hülse umgreifbar ist, somit zugleich exakt zentriert ist, und außerdem der als Hülse ausgebildete Endbereich fertigungstechnisch sehr einfach herzustellen ist, nämlich als komplementäres Gegenstück zum Endbereich der Motorwelle.

In einer weiteren Ausgestaltung der Erfindung ist der Endabschnitt der Motorwelle zylindrisch, der längs einer Mantellinie mit einer äußeren Nut versehen ist, an der Innenseite der Hülse am Endabschnitt des Rotors ist eine axial verlaufende Nut vorgesehen, und es ist ferner ein Keilstück vorgesehen, das sich sowohl in die Nut der Motorwelle als auch in die Nut in der Hülse hinein erstreckt, so daß dadurch eine drehschlüssige Verbindung zwischen Motorwelle und Rotor geschaffen ist.

Bei bekannten Rasenmähermotoren ist an der Außenseite der Motorwelle eine derartige Nut vorgesehen, die zum drehschlüssigen Anbau des Messers des Rasenmähers dient. Das Vorsehen einer Nut an der Innenseite der Hülse ist fertigungstechnisch leicht zu bewerkstelligen, ferner ist der Drehschluß beim Zusammenbau sehr einfach zu bewerkstelligen, indem nämlich das Keilstück in eine der beiden Nuten eingelegt und in einer axial gerichteten Bewegung der Endabschnitt der Motorwelle des Rasenmähers in die Hülse in entsprechender Drehstellung eingelegt wird. Es wäre selbstverständlich auch möglich, an der Innenseite der Hülse eine entsprechende, vorstehende Nase vorzusehen, die in die Nut an der Außenseite der Motorwelle eingreift, dies wäre allerdings fertigungstechnisch aufwendiger zu bewerkstelligen.

In einer weiteren Ausgestaltung der Erfindung wird als Generator ein serienmäßiger Generator eingesetzt, dessen serienmäßiger Rotor durch einen Rotor ersetzt ist, dessen Endabschnitt dem Endabschnitt der Motorwelle des Rasenmähermotors angepaßt ist.

Diese Maßnahme hat nun den erheblichen Vorteil, daß auch beim Generator im wesentlichen auf ein serienmäßiges Produkt zurück-gegriffen wird, bei dem lediglich der Rotor entsprechend angepaßt ist. Dabei ist es möglich, lediglich einen Endbereich an den serienmäßigen Rotor anzusetzen, oder einen komplett neuen Rotor einzusetzen. Dies ist dewegen nicht sehr aufwendig, da Rotoren in Generatoren üblicherweise als einteiliges Drehstück hergestellt werden, auf dem die Wicklung schon von vornherein vorhanden ist oder nachträglich einfach im Paßsitz aufgeschoben werden kann. Somit ist durch eine einzige konstruktive Umgestaltungsmaßnahme ein serienmäßiger Generator an den serienmäßigen Rasenmähermotor anzupassen. Somit setzt sich das Grundkonzept der Erfindung fort, auch beim Generator auf möglichst ausgereifte Großserienprodukte zurückzugreifen, die sich bereits im praktischen Einsatz als betriebssicher gezeigt haben.

In einer weiteren Ausgestaltung der Erfindung ist vorgesehen, daß der Adapter auf seiten des serienmäßigen Generators an diesem an vorhandenen Befestigungsstellen anbringbar ist.

Diese Maßnahme hat nun den weiteren Vorteil, daß der Adapter nicht nur auf seiten des Rasenmähermotors an dort bereits vorhandene Befestigungsstellen angebracht werden kann, also an diese adaptiert ist, sondern auch andererseits an bereits vorhandene Befestigungsstellen des Generators angebracht werden kann. Somit sind keine weiteren baulichen Veränderungen an dem Generator als die zuvor erwähnte Anpassung des Endbereichs des Rotors notwendig. Adaptoren sind als Formteile einfach herstellbar und ohne großen Kostenaufwand an die entsprechenden Serienprodukte Rasenmähermotor und Generator anpaßbar.

In einer weiteren Ausgestaltung der Erfindung ist der Zusammenbau aus Rasenmähermotor und Generator über den Adapter am Gestell befestigt.

Diese Maßnahme hat nun den Vorteil, daß nur sehr wenige Bauteile neben den Großserienbauteilen vorhanden sind, denn der Adapter dient nicht nur zum Befestigen der beiden Bauteile Rasenmähermotor und Generator untereinander, sondern dient auch zugleich dazu, um diesen Zusammenbau am Gestell zu befestigen.

Damit sind für den Hersteller eines derartigen Stromerzeugers nur wenige individuell anzupassende Bauteile zu fertigen, bzw. bei verschiedenartig ausgestalteten Baukomponenten nur wenige Bauteile auf Lager zu halten. Auch diese Maßnahme trägt zur konstruktiven Einfachheit und Wirtschaftlichkeit der Stromerzeuger bei.

In einer weiteren Ausgestaltung ist der Zusammenbau über Dämpfungselemente schwingungsdämpfend am Gestell befestigt.

Diese Maßnahme hat nun den erheblichen Vorteil, daß durch die schwingungsdämpfende Anbringung unvermeidliche Vibrationen stark gedämpft werden können, so daß auch Resonanzschwingungen zwischen Zusammenbau aus Rasenmähermotor, Generator und Gestell, die möglicherweise zu einem Umkippen des Gestelles führen können, ausgeschlossen sind. Dadurch ist dann auch ein sicherer Stand des Gestelles auf einem Grund, auf dem der Stromerzeuger ruht, gewährleistet.

In einer weiteren Ausgestaltung der Erfindung ist der Adapter als separate Adapterplatte ausgebildet, die einerseits dem Rasenmähermotor, andererseits dem Generator angepaßt ist.

Diese Maßnahme hat nun den erheblichen Vorteil, daß eine derartige Adapterplatte beispielsweise als einfaches Stanzteil kostengünstig herzustellen ist, wobei diese kostengünstige Herstellungsweise auch eine flexible Produktpalette dahingehend ermöglicht, daß je nach Wunsch an einen bestimmten Gestelltyp, einen bestimmten serienmäßigen Rasenmähermotortyp oder einen bestimmten serienmäßigen Generatortyp flexibel angepaßt werden kann, das heißt beispielsweise bei einer Veränderung nur eines der drei Typen die beiden anderen Montagemerkmale der Platte unverändert bleiben können und lediglich die Anpassung an ein neues Bauteil, sei es das Gestell, sei es der serienmäßige Rasenmähermotor, sei es der Generator, durchgeführt werden muß.

In einer weiteren Ausgestaltung der Erfindung ist in der Adapterplatte zumindest eine Öffnung vorgesehen, durch die Kühlluft an den Bereich der Ölwanne des Rasenmotors treten kann.

Diese Maßnahme hat den Vorteil, daß durch die Adapterplatte hindurch Kühlluft an die Unterseite des Rasenmähermotorgehäuses treten kann, wobei in diesem Bereich die Ölwanne angeordnet ist. Ist der Generator endseitig mit einem Kühlgebläse versehen, was bei den meisten serienmäßigen Generatoren der Fall ist, so ist es möglich, daß die von diesem Gebläse erzeugte Kühlluft längs der Rippen an der Außenseite des Generators geleitet durch die Öffnungen in der Adapterplatte hindurch an die Unterseite des Rasenmähermotorgehäuses treten kann, und dort zur Kühlung des in der Ölwanne aufgenommenen Öles herangezogen werden kann.

Diese Maßnahme stellt ein Beitrag im Rahmen der gestellten Aufgabe deswegen dar, da nämlich keine zusätzlichen Kühlvorrichtungen vorgesehen werden müssen, sondern das am Generator vorhandene Gebläse zur Kühlung des Rasenmähermotors herangezogen wird.

In einer weiteren Ausgestaltung der Erfindung ist zwischen Rasenmähermotor und Generator ein Distanzstück zwischengelegt.

Diese Maßnahme hat nun den Vorteil, daß durch das Distanzstück der genau gewünschte Abstand geschaffen werden kann, wobei die eigentliche Verbindung zwischen dem Bauteil und Rasenmähermotor und Generator nach wie vor durch den Adapter erfolgt, dieser aber, was den axialen Abstand zwischen diesen beiden Bauelementen betrifft, größere Toleranzen aufweisen kann, da ja dieser vom Distanzstück vorgegeben wird. Trotz des Vorsehens des zusätzlichen Bauteils in Form eines Distanzstückes kann sich dadurch, daß bei der Herstellung der Adapterplatte größere Toleranzen möglich sind, insgesamt eine technisch weniger aufwendigere Konstruktion ergeben.

In einer weiteren Ausgestaltung der Erfindung ist das Distanzstück über die Motorwelle geschoben, und es ist der jeweiligen Kontur von Rasenmähermotor bzw. Generator in dem Bereich, in dem es an diesen anliegt, angepaßt.

Diese Maßnahme hat den Vorteil, daß durch das Distanzstück zusätzlich noch eine hervorragende Zentrierung und Ausrichtung der beiden aneinanderfügenden Teile möglich ist. Ist beispielsweise auf der Stirnseite des Generators ein Flansch (beispielsweise ein Flansch nach SAE) vorgesehen, kann an dem Distanzstück eine entsprechende Ausnehmung vorgesehen sein, in die der Flansch passend eintreten kann. Bei Rasenmähermotoren ist in dem Bereich, aus dem der Motorwellenendabschnitt aus dem Gehäuse austritt, ein etwa ringförmiger Raum vorhanden, der zum einen durch den Lagersitz des Motorwellenendabschnittes bzw. um entsprechende Verstärkungssicken am Gehäuse umgrenzt ist. In diesem Falle ist dann das Distanzstück auf dieser Seite so ausgebildet, daß von diesem ein Ringflansch vorsteht, der genau in diesen Ringraum eintreten kann. Das Distanzstück, das auch als Adapter fungiert, sorgt durch die Anpassung für einen exakten und zentrierten Sitz der beiden aneinanderzufügenden Teile.

In einer weiteren Ausgestaltung der Erfindung ist der Rasenmähermotor in einem oberen Bereich des Gestells angeordnet, wobei sein nach unten weisender Endabschnitt der Motorwelle koaxial mit dem Rotor eines unterhalb des Rasenmähermotors angeordneten Generators verläuft, und wobei der Adapter schwingungsdämpfend mit dem Gestell verbunden ist.

Diese Maßnahme hat nun den erheblichen Vorteil, daß in dem Gestell ein kompakter Zusammenbau vorhanden ist, bei dem an dem Rasenmähermotor in einer für dessen Betrieb tatsächlich vorgesehenen Montagestellung lediglich anstelle des rotierenden Messers der Generator angehängt bzw. angebracht ist. Der Adapter, der etwa mittig zwischen diesen beiden übereinander angeordneten Bauelementen angeordnet ist, ermöglicht eine besonders schwingungsdämpfende und massenausgeglichene Aufhängung des Zusammenbaus aus Rasenmähermotor und Generator deswegen, da der Zusammenbau um diese Schwingungsdämpfungsebene aus der Senkrechten leicht kippend schwingen kann, ohne daß dabei die Gefahr besteht, daß der Rotor unrund im Stator des Generators läuft. Diese besonders bevorzugte Ausgestaltung führt neben einem besonders einfachen konstruktiven Aufbau unter Verwendung serienmäßiger Bauteile zu einem äußerst vibrationsarmen betriebssicheren Lauf.

Dies wird noch insbesondere dadurch vorteilhaft weiter ausgestaltet, daß bei stehendem Gestell Motorwelle und Rotorachse vertikal verlaufen.

Es versteht sich, daß die vorstehend genannten und die nachstehend noch zu erläuternden Merkmale nicht nur in der angegebenen Kombination sondern auch in anderen Kombinationen und in Alleinstellung einsetzbar sind, ohne den Rahmen der vorliegenden Erfindung zu verlassen.

Die Erfindung wird nachfolgend anhand eines ausgewählten Ausführungsbeispiels näher beschrieben und erläutert.

Es zeigen
- Fig. 1: stark schematisiert eine Seitenansicht eines erfindungsgemäßen Stromerzeugers, in dem diejenigen Bauteile, die speziell angepaßt werden müssen, nämlich Adapter und Rotor des Generators, im Schnitt dargestellt sind,
- Fig. 2: eine der Darstellung von Fig. 1 vergleichbare ausschnittsweise Explosionsdarstellung, teilweise im Schnitt, teilweise aufgebrochen, eines erfindungsgemäßen Stromerzeugers,
- Fig. 3: eine Draufsicht auf eine Adapterplatte zur Befestigung von Bauteilen des Stromerzeugers untereinander,
- Fig. 4: einen Schnitt längs der Linie IV-IV in Fig. 3,
- Fig. 5: einen Schnitt längs der Linie V-V in Fig. 3,
- Fig. 6: ein weiteres Ausführungsbeispiel einer Adapterplatte, und
- Fig. 7: einen Schnitt eines weiteren Ausführungsbeispiels eines erfindungsgemäßen Stromerzeugers mit einem Distanzstück.

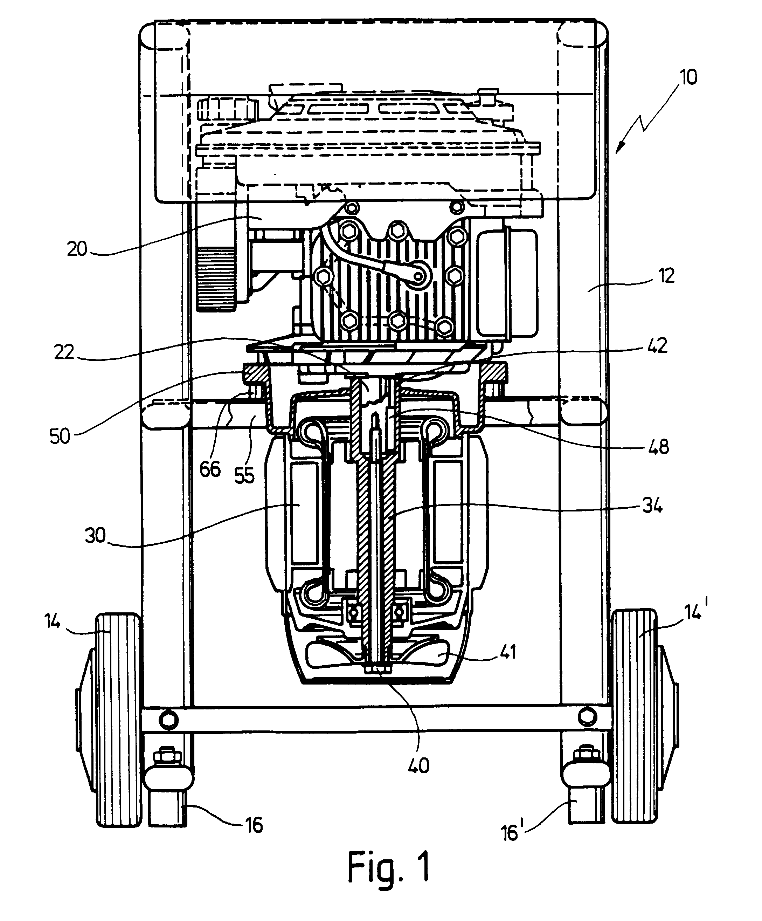

Ein in Fig. 1 in Seitenansicht dargestellter Stromerzeuger ist in seiner Gesamtheit mit der Bezugsziffer 10 versehen.

Der Stromerzeuger 10 weist ein Gestell 12 aus einem Rohrrahmen auf, dessen Grundriß viereckig ist.

Räder 14, 14' bieten einen bodenseitigen Auflagepunkt an einer Viereckseite. Den Rädern gegenüberliegend, in der Darstellung von Fig. 1 vor diesen liegend, bilden Stützfüße 16, 16' weitere Auflagepunkte auf einem Grund, auf dem das Gestell 12 steht. Im Gestell 12 ist ein Rasenmähermotor 20 aufgenommen, der ein Großserienprodukt darstellt, im vorliegenden Fall ein Rasenmähermotor, wie er von der Firma BRIGGS & STRATTON unter der Bezeichnung XM-35 hergestellt wird. Der Rasenmähermotor 20 ist ein kraftstoffbetriebener Verbrennungsmotor, wie dies an sich bekannt ist, und weist, in der Darstellung von Fig. 1 an dessen unterer Seite, eine von dieser vorstehende Motorwelle 22 auf.

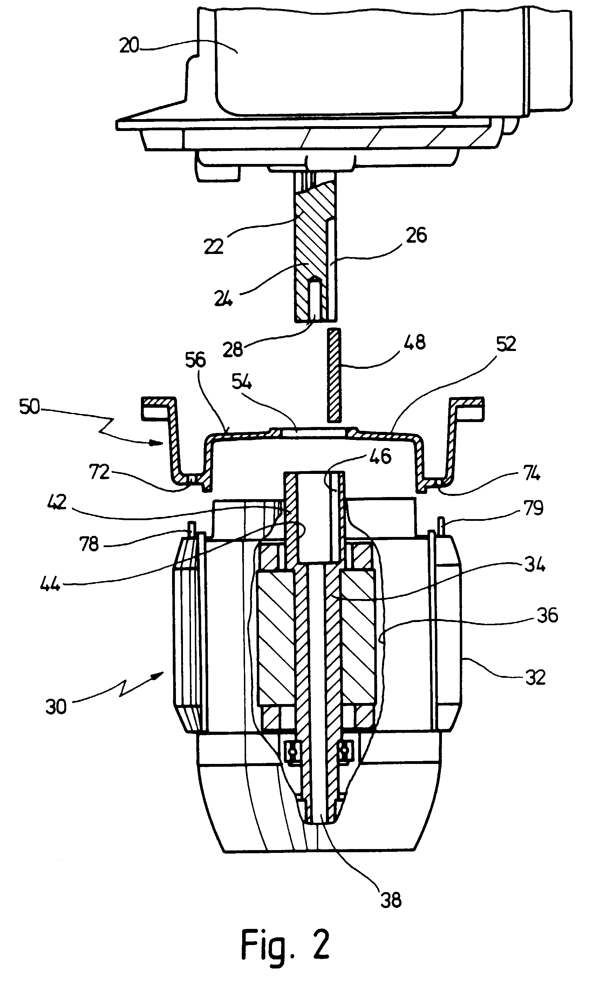

Wie aus der Explosionsdarstellung von Fig. 2 am oberen Ende zu entnehmen, ist die Motorwelle 22 des Rasenmähermotors 20 in einem Endabschnitt 24, in dem die Motorwelle 22 etwa zylindrisch ausgebildet ist, mit einer längs einer Mantellinie verlaufenden Nut 26 versehen, die bis zum äußeren Ende verläuft. Ferner ist in der hier nicht näher bezeichneten endseitigen Stirnfläche eine Sacklochbohrung 28 vorhanden.

Aus Fig. 1 ist ferner zu entnehmen, daß ein Generator 30 vorgesehen ist, der als stromerzeugendes Bauelement dient.

Der Generator 30 weist ein Gehäuse 32 auf, in dem mittig, wie an sich bekannt, ein Rotor 34 aufgenommen ist (siehe auch Fig. 2, untere Hälfte).

Der Rotor 34 ist drehbar in einem Stator 36 aufgenommen, der ortsfest im Gehäuse 32 des Generators 30 aufgenommen ist. Durch Drehen des Rotors 34 im Stator 36 wird, wie dies an sich auf diesem Fachgebiet bekannt ist, Strom erzeugt. Der erzeugte Strom wird, wie dies ebenfalls auf dem Gebiet der Stromerzeuger üblich ist, einer hier nicht näher dargestellten Entnahmestelle in Form einer Steckdose zugeführt. Weitere übliche Bauelemente, wie Schaltelemente, Funktionsanzeigen, Stromanzeige oder dergleichen, sind vorgesehen, wie das auf dem Gebiet der Stromerzeuger üblich ist, wobei diese Bauelemente nicht dargestellt sind.

Der Rotor 34 weist eine mittige durchgehende Öffnung 38 auf, durch die eine Montagestange 40 hindurchreicht (siehe Fig. 1). Die Montagestange 40 ist dabei derart ausgestaltet, daß sie in die Sacklochbohrung 28 im Endabschnitt 24 der Motorwelle 22 eingreifen kann. Dazu ist die Sacklochbohrung 28 mit einem hier nicht näher dargestellten Innengewinde bzw. der entsprechende Abschnitt der Montagestange 40 mit einem passenden Außengewinde versehen. Die Montagestange 40 hält auch endseitig ein Gebläse 41, das Kühlluft längs des Generators 30 bewegt.

Ein Endabschnitt 42 des Rotors 34, der zum Teil über das Gehäuse 32 hinausragt, weist die Form einer Hülse 44 auf, deren lichter Innendurchmesser derart ausgebildet ist, daß in den Innenraum passend der Endabschnitt 24 der Motorwelle 22 eingeschoben werden kann.

Wie insbesondere aus Fig. 2 zu entnehmen, ist an der Innenseite der Hülse 44 in axialer Richtung des Generators 30 eine Nut 46 eingeschnitten.

Die Nut 26 an der Außenseite des Endabschnittes 24 der Motorwelle 22 und die Nut 46 an der Innenseite der Hülse 44 sind dabei derart konturiert, daß sie formschlüssig ein Keilstück 48 umschließen.

Beim Zusammenbauen von Rasenmähermotor 20 und Generator 30 wird das Keilstück 48 so an Ort und Stelle gebracht, daß es in den Hohlraum der gegenüberliegenden Nuten 26 und 46 zum Liegen kommt. Demzufolge wird beim Einschieben des Endabschnittes 24 der Motorwelle 22 in die Hülse 44 darauf geachtet, daß die Nuten 26 und 46 in der entsprechenden Ausrichtung sind, ansonsten ist dieses Einschieben ohnehin nicht möglich. Nach dem Einschieben ist eine drehschlüssige Verbindung zwischen Endabschnitt 24 der Motorwelle 22 und dem Endabschnitt 42 des Rotors 34 geschaffen.

Aus der Schnittdarstellung von Fig. 1 ist zu entnehmen, daß zwischen Rasenmähermotor 20 und Generator 30 ein Adapter 50 in Form einer Adapterplatte 52 vorgesehen ist.

In Figuren 2 bis 5 ist diese Adapterplatte 52 detaillierter dargestellt.

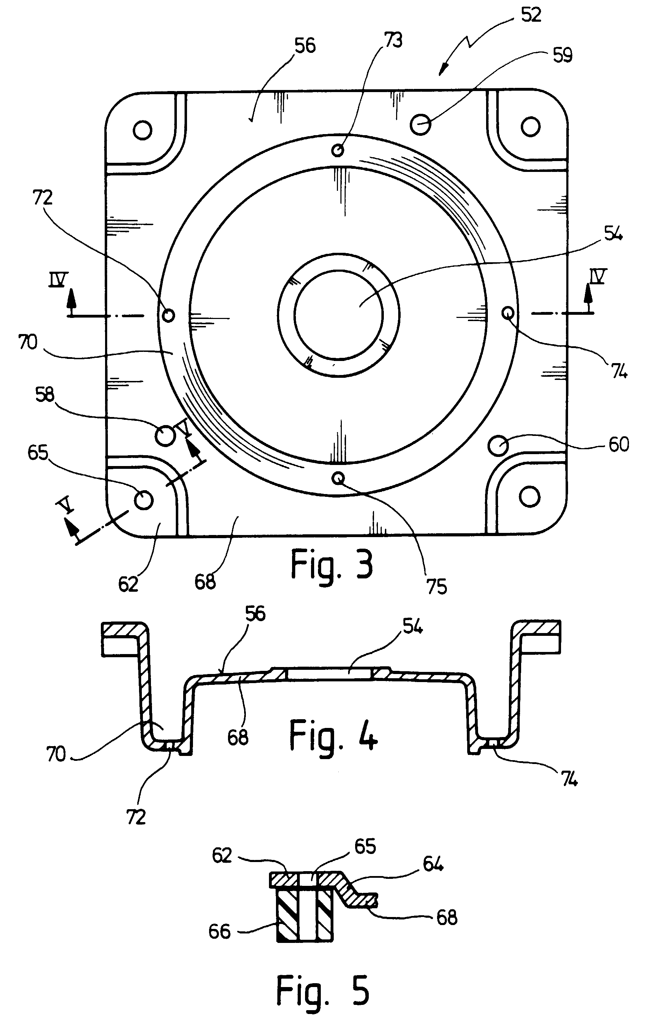

Aus Fig. 3, die eine Draufsicht auf die etwa quadratische Adapterplatte 52 von seiten des Rasenmähermotors 20 her darstellt, ist zu erkennen, daß die Adapterplatte 52 mit einer mittigen Öffnung 54 versehen ist, die dazu dient (siehe auch Fig. 2), daß der Endabschnitt 24 der Motorwelle 22 durch diese Öffnung 54 hindurchgeschoben werden kann.

Aus Fig. 3 ist ferner zu entnehmen, daß die Adapterplatte 52 mit vier an sich gleich ausgestalteten Ecken versehen ist, wobei nachfolgend lediglich die Ausgestaltung der in der Darstellung von Fig. 3 linken unteren Ecke 62 beschrieben ist, wobei dies gleichermaßen für die drei anderen nicht näher bezeichneten Ecken gilt.

Im Bereich der Ecke 62 ist die Adapterplatte 52, von einem ebenen Bereich 68 aus gesehen, nach oben gerichtet mit einem gekröpften Bereich 64 versehen, in dem eine Öffnung 65 vorgesehen ist. In der Darstellung von Fig. 1 und Fig. 5 unterhalb des gekröpften Bereiches kommt ein Dämpfungselement 66 zum Liegen, das aus elastischem Kunststoff oder aus Gummi hergestellt ist. Auch das Dämpfungselement 66 ist mit einer durchgehenden, hier nicht näher bezeichneten Bohrung versehen. Die Adapterplatte 52 wird über ihre vier Ecken und die daruntergelegenen Dämpfungselemente 66 in einem etwa auf mittiger Höhe des Gestells 12 umlaufenden Rohrrahmen 55 (siehe Fig. 1) befestigt. Wie insbesondere aus der Explosionsdarstellung von Fig. 2 zu entnehmen, ist die Adapterplatte 52 auf einer Seite 56, die der Unterseite des Rasenmähermotors 20 zugewandt ist, dermaßen konturiert ausgestaltet, daß die Adapterplatte 52 über die Motorwelle 22 geschoben und an diese Unterseite passend angelegt werden kann.

Wie aus Fig. 3 zu entnehmen, sind in dem ebenen Bereich 68 der Adapterplatte 52 drei etwa um 120° winkelversetzt angeordnete Öffnungen 58, 59, 60 vorgesehen, die deckungsgleich mit entsprechenden, hier nicht näher bezeichneten Montagestellen an der Unterseite des Rasenmähermotors 20 zum Liegen kommen. Diese Montagestellen sind als mit Innengewinde versehene Sacklochbohrungen oder durchgehende Öffnungen ausgestaltet und sind bereits vom Hersteller des Rasenmähermotors 20 vorgesehen und dienen dazu, den Rasenmähermotor 20, falls er in einem Rasenmäher eingebaut wird, an dessen Untergestell zu befestigen. Durch Eindrehen von Schrauben durch die Öffnungen 58, 59, 60 hindurch ist es möglich, die Adapterplatte 52 im Paßsitz an die Unterseite des Rasenmähermotors 20 anzubringen.

Wie ferner aus Fig. 4 zu entnehmen, ist die der Seite 56 gegenüberliegende Seite der Adapterplatte 52 ebenfalls so konturiert, daß diese passend an die Seite des Gehäuses 32 des Generators 30 anlegbar ist, von der der Endabschnitt 42 des Rotors 34 vorsteht. Dazu ist in der Adapterplatte 52 ein vertiefter Ringflanschbereich 70 vorgesehen, der auf der entsprechenden oberen umlaufenden Ringfläche an der Oberseite des Gehäuses 32 des Generators 30 zum Liegen kommt, wie dies insbesondere aus Fig. 1 zu ersehen ist.

In dem Boden des vertieften Ringflanschbereichs 70 sind umfänglich gleichmäßig verteilt vier Öffnungen 72, 73, 74, 75 vorgesehen, durch die Befestigungselemente an der Oberseite des Gehäuses 32 des Generators 30 hindurchreichen können. Diese Befestigungselemente sind entweder vier von der Oberseite des Generators abstehende Gewindestifte, oder sind entsprechende, mit einem Innengewinde versehene Öffnungen an der Oberseite.

Im in Fig. 2 dargestellten Ausführungsbeispiel sind dies entsprechend vorstehende Zapfen, von denen lediglich die beiden Zapfen 78 und 79 zu erkennen sind, die nach Aufsetzen der Adapterplatte 52 durch die Öffnungen 72 und 74 im vertieften Ringflanschbereich 70 der Adapterplatte 52 hindurchreichen. Nach Aufdrehen entsprechender Muttern auf die mit einem Außengewinde versehenen Zapfen 78, 79 ist ein fester Zusammenbau aus Rasenmähermotor 20, Adapterplatte 52 und Generator 30 entstanden, der über die vier Ecken und über die Dämpfungselemente 66 schwingungsgedämpft im Gestell 12 aufgenommen ist.

Aus Fig. 1 ist zu entnehmen, daß im endmontierten Zustand der Generator 30 unterhalb des Rohrrahmens 55 an der Unterseite des Rasenmähermotors 20 hängt. Rotor 34 und Motorwelle 22 verlaufen dabei koaxial und werden über die Montagestange 40, die in die Sacklochbohrung 28 eingedreht ist, in axialer Richtung unverlierbar miteinander gehalten.

In weiteren, hier nicht dargestellten Ausführungsbeispielen kann die Adapterplatte 52 auch einstückig mit dem Generator 30 ausgebildet sein, so daß dann lediglich noch der Generator 30 an die Unterseite des Rasenmähermotors 20 angebracht werden muß.

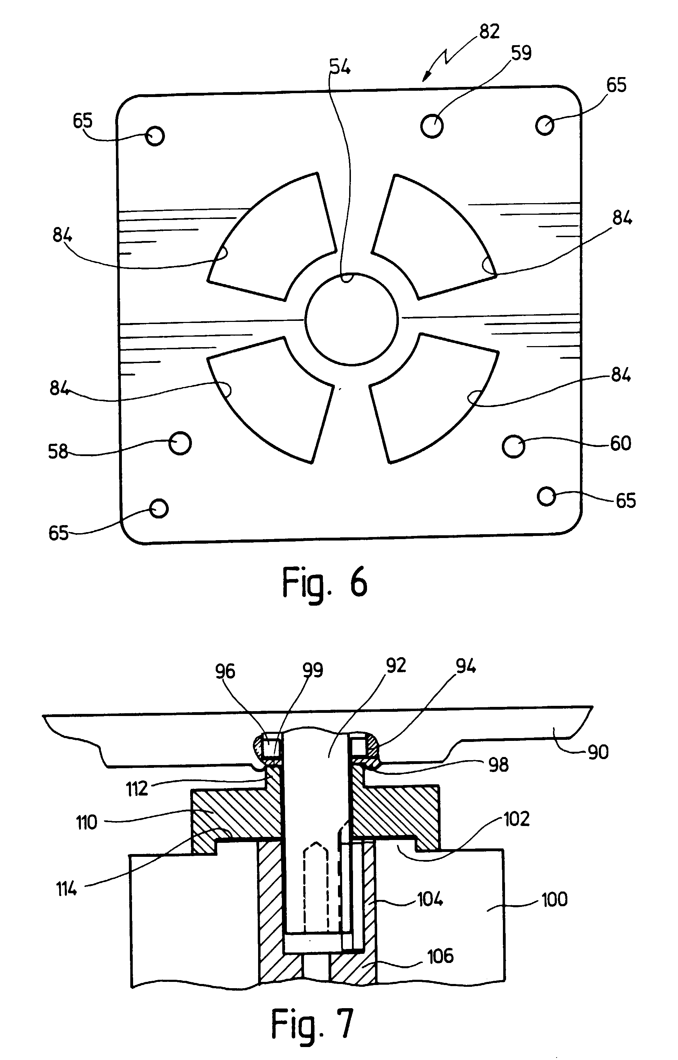

In Fig. 6 ist ein weiteres Ausführungsbeispiel einer Adapterplatte 82 dargestellt, die neben den Öffnungen 65 zum Verbinden mit dem Generator einerseits, sowie den Öffnungen 58, 59 und 60 zum Verbinden mit dem Rasenmähermotor andererseits, und der mittigen Öffnung 54 zum Durchtritt der Motorwelle zusätzliche Öffnungen 84 aufweist, die konzentrisch um die mittige Öffnung 54 angeordnet sind.

Die Öffnungen 84 dienen dazu, um Kühlluft, die von dem Gebläse 41 des Generators erzeugt wird (siehe Fig. 1), und die von unten nach oben längs der Außenseite des Generators strömt, durchtreten zu lassen und an die Unterseite des Gehäuses des Rasenmähermotores 20 treten zu lassen. In diesem Bereich ist die Ölwanne des Rasenmähermotors 20 angeordnet, so daß die vom Generator erzeugte Kühlluft zugleich zum Kühlen des Öles des Rasenmähermotores herangezogen werden kann.

Die in Fig. 6 dargestellte Platte ist in etwa als ebene Platte ausgeführt, d.h. in diesem Fall sind Rasenmähermotor und Generator sehr eng aneinanderliegend, so daß die Platte eine einfachere Form aufweisen kann, wie dies das beim vorangezeigten Ausführungsbeispiel aus Fig. 4 ersichtlich ist. Dadurch, daß die Adapterplatte 82 mit den Öffnungen 84 zum Durchtritt der Kühlluft versehen ist, können die beiden Bauteile Rasenmähermotor und Generator sehr eng aneinandergefügt werden.

Bei einem in Fig. 7 dargestellten weiteren Ausführungsbeispiel weist ein Rasenmähermotor 90, der im Prinzip gleich ausgebildet, wie der zuvor beschriebene Rasenmähermotor 20, im Bereich seiner aus dem Gehäuse vorstehenden Motorwelle 92 an der Innenseite des Gehäuses ein Lagersitz 94 auf, in den ein Lager 96 eingepreßt ist. Auf der Außenseite des Gehäuses ist zur Verstärkung ein den Lagersitz 94 umrundender Ringwulst 98 vorgesehen. Dadurch existiert um die Motorwelle 92 in den Bereich, in dem diese aus dem Gehäuse austritt, ein Ringraum 99.

Der Generator 100 ist ein serienmäßiger Generator nach SAE, der an seiner Stirnseite, an der die Hülse 104 des Rotors 106 austritt, mit einem Ringflansch 102 versehen.

Aus der Schnittdarstellung von Fig. 7 ist nun zu erkennen, daß ein Distanzstück 110 zwischengelegt ist, das einerseits einen Ringflansch 112 aufweist, der exakt in den Ringraum 99 paßt.

An der gegenüberliegenden Seite ist das Distanzstück 110 mit einer Ausnehmung 114 versehen, in die exakt der Ringflansch 102 des Generators 100 paßt.

Durch eine hier nicht näher bezeichnete mittige Öffnung des Distanzstückes 110 reicht die Motorwelle 92 durch.

Durch das Distanzstück 110 und dessen den beiden gegenüberliegenden Bereichen der Bauteile Rasenmähermotor 90 bzw. Generator 100 angepaßten Kontur ist eine exakte Zentrierung und Ausrichtung der beiden aneinanderzufügenden Teile möglich.

Es ist nun beispielsweise möglich, bei der in Fig. 7 dargestellten Konstruktion die in Fig. 6 dargestellte Adapterplatte heranzuziehen, so daß die Adapterplatte weniger eine Zentrierund Ausrichtfunktion übernehmen muß, da dies durch das Distanzstück 110 übernommen wird, sondern nur zum Anbringen an die entsprechenden Befestigungsstellen von Generator 100 bzw. Rasenmähermotor 90 angepaßt sein muß.

## Patentansprüche

1. Stromerzeuger für Einsatzzwecke wie Camping, Garten oder Boote, mit einem Verbrennungsmotor, dessen Motorwelle (22, 92) in Wirkverbindung mit einem Rotor (34, 106) eines stromerzeugenden Generators (30, 100) steht, sowie mit einem diese Bauteile tragenden Gestell (12), dadurch gekennzeichnet, daß der Verbrennungsmotor ein serienmäßiger Rasenmähermotor (20, 90) ist, dessen serienmäßiger Motorwellenendabschnitt (24) mit einem diesem Endabschnitt (24) angepaßten Endabschnitt (42) des Rotors (34, 106) unmittelbar verbunden ist, und daß ein Adapter (50) vorgesehen ist, der einerseits an vorhandenen Befestigungsstellen des Rasenmähermotors (20, 90) angebracht ist, andererseits mit dem Generator (30, 100) verbunden ist.

2. Stromerzeuger nach Anspruch 1, dadurch gekennzeichnet, daß der Endabschnitt (42) des Rotors (34, 106) als Hülse (44, 104) ausgebildet ist, in der der serienmäßige Endabschnitt (24) der Motorwelle (22, 92) aufgenommen ist.

3. Stromerzeuger nach Anspruch 2, dadurch gekennzeichnet, daß der Endabschnitt (24) der Motorwelle (22, 92) zylindrisch ist, der längs einer Mantellinie mit einer äußeren Nut (26) versehen ist, daß an der Innenseite der Hülse (44) am Endabschnitt (42) des Rotors (34) eine axial verlaufende Nut (46) vorgesehen ist, und daß ein Keilstück (48) vorgesehen ist, das sich sowohl in die Nut (26) an der Motorwelle (22) als auch in die Nut (46) in der Hülse (44) hinein erstreckt, so daß dadurch eine drehschlüssige Verbindung zwischen Motorwelle (22) und Rotor (34) geschaffen ist.

4. Stromerzeuger nach einem der Ansprüche 1 bis 3, dadurch gekennzeichnet, daß als Generator (30, 100) ein serienmäßiger Generator eingesetzt wird, dessen serienmäßiger Rotor durch einen Rotor (34, 106) ersetzt ist, dessen Endabschnitt (42) dem Endabschnitt (24) der Motorwelle (22) des Rasenmähermotors (20) angepaßt ist.

5. Stromerzeuger nach einem der Ansprüche 1 bis 4, dadurch gekennzeichnet, daß der Adapter (50) auf seiten des serienmäßigen Generators an an letzterem vorhandenen Befestigungsstellen anbringbar ist.

6. Stromerzeuger nach einem der Ansprüche 1 bis 5, dadurch gekennzeichnet, daß der Zusammenbau aus Rasenmähermotor (20) und Generator (30) über den Adapter (50) am Gestell (12) befestigt ist.

7. Stromerzeuger nach Anspruch 6, dadurch gekennzeichnet, daß der Zusammenbau über Dämpfungselemente (66) schwingungsdämpfend am Gestell (12) befestigt ist.

8. Stromerzeuger nach einem der Ansprüche 1 bis 7, dadurch gekennzeichnet, daß der Adapter (50) als separate AdapterPlatte (52, 82) ausgebildet ist, die einerseits dem Rasenmähermotor (20) und andererseits dem Generator (30) angepaßt ist.

9. Stromerzeuger nach Anspruch 8, dadurch gekennzeichnet, daß in der Adapterplatte (82) zumindest eine Öffnung (84) vorgesehen ist, durch die Kühlluft an den Bereich der Ölwanne des Rasenmähermotors (20, 90) treten kann.

10. Stromerzeuger nach einem der Ansprüche 1 bis 9, dadurch gekennzeichnet, daß zwischen Rasenmähermotor (90) und Generator (100) ein Distanzstück (110) zwischengelegt ist.

11. Stromerzeuger nach Anspruch 10, dadurch gekennzeichnet, daß das Distanzstück (110) über die Motorwelle (92) geschoben ist und daß es der jeweiligen Kontur von Rasenmähermotor (90) bzw. Generator (100) in dem Bereich, in dem es an diesen liegt, angepaßt ist.

12. Stromerzeuger nach einem der Ansprüche 1 bis 11, dadurch gekennzeichnet, daß der Rasenmähermotor (20) in einem oberen Bereich des Gestells (12) angeordnet ist, daß sein nach unten weisender Endabschnitt (24) der Motorwelle (22) koaxial mit dem Rotor (34) des unterhalb des Rasenmähermotors angeordneten Generators (30) verläuft, und daß der Adapter (50) schwingungsdämpfend mit dem Gestell (12) verbunden ist.

13. Stromerzeuger nach Anspruch 12, dadurch gekennzeichnet, daß bei stehendem Gestell (12) Motorwelle (22) und Rotorachse vertikal verlaufen.

## Claims

1. Electricity generator for purposes such as camping, gardens or boats, having an internal-combustion engine whose engine shaft (22, 92) is operatively connected to a rotor (34, 106) of an electricity-producing generator (30, 100), and having a framework (12) which supports these components, characterized in that the internal-combustion engine is a standard-production lawnmower engine (20, 90) whose standard-production engine shaft end section (24) is directly connected to an end section (42) of the rotor (34, 106) which is matched to this end section (24), and in that an adaptor (50) is provided which, on the one hand, is fitted to existing mounting points on the lawnmower engine (20, 90) and, on the other hand, is connected to the generator (30, 100).

2. Electricity generator according to Claim 1, characterized in that the end section (42) of the rotor (34, 106) is designed as a sleeve (44, 104) in which the standard-production end section (24) of the motor shaft (22, 92) is accommodated.

3. Electricity generator according to Claim 2, characterized in that the end section (24) of the engine shaft (22, 92) is cylindrical and is provided along an outer line with an outer groove (26), in that an axially running groove (46) is provided on the inside of the sleeve (44) on the end section (42) of the rotor (34), and in that a key (48) is provided, which extends both into the groove (26) on the motor shaft (22) and into the groove (46) in the sleeve (44) so that, in consequence a rotationally locked connection is produced between the engine shaft (22) and the rotor (34).

4. Electricity generator according to one of Claims 1 to 3, characterized in that a standard-production generator is used as the generator (30, 100), whose standard-production rotor is replaced by a rotor (34, 106) whose end section (42) is matched to the end section (24) of the engine shaft (22) of the lawnmower engine (20).

5. Electricity generator according to one of Claims 1 to 4, characterized in that the adaptor (50) can be fitted, on the standard-production generator side, at mounting points which exist on the latter.

6. Electricity generator according to one of Claims 1 to 5, characterized in that the assembly comprising the lawnmower engine (20) and the generator (30) is mounted on the framework (12) via the adaptor (50).

7. Electricity generator according to Claim 6, characterized in that the assembly is mounted on the framework (12) via damping elements (66), such that vibration is damped out.

8. Electricity generator according to one of Claims 1 to 7, characterized in that the adaptor (50) is designed as a separate adaptor plate (52, 82) which is matched on one side to the lawnmower engine (20) and on the other side to the generator (30).

9. Electricity generator according to Claim 8, characterized in that at least one opening (84) is provided in the adaptor plate (82), through which opening (84) cooling air can reach the area of the oil sump of the lawnmower engine (20, 90).

10. Electricity generator according to one of Claims 1 to 9, characterized in that a spacer (110) is fitted between the lawnmower engine (90) and the generator (100).

11. Electricity generator according to Claim 10, characterized in that the spacer (110) is pushed over the engine shaft (92), and in that it is matched to the respective contour of the lawnmower engine (90) and generator (100) in the area in which it rests on them.

12. Electricity generator according to one of Claims 1 to 11, characterized in that the lawnmower engine (20) is arranged in an upper region of the framework (12), in that its end section (24), which points downwards, of the engine shaft (22) runs coaxially with the rotor (34) of the generator (30), which is arranged underneath the lawnmower engine, and in that the adaptor (50) is connected to the framework (12) such that vibration is damped out.

13. Electricity generator according to Claim 12, characterized in that the engine shaft (22) and the rotor axis run vertically when the framework (12) is upright.

## Revendications

1. Générateur de courant pour des applications comme le camping, le jardin, le bateau, avec un moteur à combustion, dont l'arbre moteur (22, 92) est en liaison active avec un rotor (34, 106) d'un générateur (30, 100) produisant du courant, ainsi qu'avec un châssis (12) portant ces composants, caractérisé en ce que le moteur à combustion est un moteur de tondeuse à gazon de série (20, 90), dont la section d'extrémité (24) de l'arbre moteur de série est reliée directement à une section d'extrémité (42) du rotor (34, 106) adaptée à cette section d'extrémité (24), et en ce qu'un adaptateur (50) est prévu, qui est placé d'une part sur des points de fixation présents sur le moteur de tondeuse à gazon (20, 90), et est relié d'autre part au générateur (30, 100).

2. Générateur de courant selon la revendication 1, caractérisé en ce que la section d'extrémité (42) du rotor (34, 106) est conformée en douille (44, 104) dans laquelle se loge la section d'extrémité de série (24) de l'arbre moteur (22, 92).

3. Générateur de courant selon la revendication 2, caractérisé en ce que la section d'extrémité (24) de l'arbre moteur (22, 92) est cylindrique et est munie d'une rainure extérieure (26) le long d'une génératrice d'enveloppe, en ce qu'une rainure axiale (46) est prévue sur la face intérieure de la douille (44) au niveau de la section d'extrémité (42) du rotor (34), et en ce qu'une pièce de calage (48) est prévue, qui s'étend à la fois dans la rainure (26) sur l'arbre moteur (22) et dans la rainure (46) dans la douille, de sorte qu'une liaison solidaire en rotation est créée entre arbre moteur (22) et rotor (34).

4. Générateur de courant selon l'une des revendications 1 à 3, caractérisé en ce que, comme générateur (30, 100), on utilise un générateur de série, dont le rotor de série est remplacé par un rotor (34, 106) dont la section d'extrémité (24) est adaptée à l'arbre moteur (22) du moteur de tondeuse à gazon (20).

5. Générateur de courant selon l'une des revendications 1 à 4, caractérisé en ce que l'adaptateur (50) peut être monté du côté du générateur de série sur des points de fixation présents sur celui-ci.

6. Générateur de courant selon l'une des revendications 1 à 5, caractérisé en ce que l'ensemble composé du moteur de tondeuse à gazon (20) et du générateur (30) est fixé sur le châssis (12) par l'intermédiaire de l'adaptateur (50).

7. Générateur de courant selon la revendication 6, caractérisé en ce que l'ensemble est fixé au châssis (12) par l'intermédiaire d'éléments d'amortissement (66) pour amortir les vibrations.

8. Générateur de courant selon l'une des revendications 1 à 7, caractérisé en ce que l'adaptateur (50) est conformé en plaque adaptatrice séparée (50, 82), qui est adaptée d'un part au moteur de tondeuse à gazon (20) et d'autre part au générateur (30).

9. Générateur de courant selon la revendication 8, caractérisé en ce qu'au moins une ouverture (84) est prévue dans la plaque adaptatrice (82), ouverture à travers laquelle de l'air de refroidissement peut arriver au niveau du carter d'huile du moteur de tondeuse à gazon (20, 90).

10. Générateur de courant selon l'une des revendications 1 à 9, caractérisé en ce qu'entre le moteur de tondeuse à gazon (90) et le générateur (100) est intercalée une pièce d'espacement (110).

11. Générateur de courant selon la revendication 10, caractérisé en ce que la pièce d'espacement (110) est enfoncée sur l'arbre moteur (92) et en ce qu'elle est adaptée au contour respectif du moteur de tondeuse à gazon (90) ou du générateur (100) dans la zone dans laquelle elle s'appuie contre celui-ci.

12. Générateur de courant selon l'une des revendications 1 à 11, caractérisé en ce que le moteur de tondeuse à gazon (20) est placé dans une zone supérieure du châssis (12), en ce que sa section d'extrémité (24) d'arbre moteur (22) tournée vers le bas s'étend de manière coaxiale au rotor (34) du générateur (30) placé sous le moteur de tondeuse à gazon, et en ce que l'adaptateur (50) est relié au châssis (12) d'une manière qui amortit les vibrations.

13. Générateur de courant selon la revendication 12, caractérisé en ce que, le châssis (12) étant debout, l'arbre moteur (22) et l'axe du rotor s'étendent verticalement.
